# EUROPEAN PATENT APPLICATION

(11) **EP 4 589 024 A1**
(43) Date of publication of application: **23.07.2025**
(21) Application number: 25152848.5
(22) Date of filing: 20.01.2025
(51) Int. Cl.: C21D 1/30, B62D 25/02, C21D 1/42, C21D 8/00, C21D 9/00, C21D 9/08, H05B 6/10, B60R 19/34, B62D 25/08, B62D 29/00, C21D 1/26, B21D 5/06, B21D 22/02, B21D 53/88, B23P 15/00, B60K 1/00

(54) **METHOD FOR MANUFACTURING IMPACT ENERGY ABSORBING COMPONENT, AND IMPACT ENERGY ABSORBING COMPONENT**

(30) Priority: 22.01.2024 JP 2024007321
(71) Applicant: TOYOTA JIDOSHA KABUSHIKI KAISHA, Aichi-ken, 471-8571 (JP)
(72) Inventor: IHARA, Tomoaki, Toyota-shi, Aichi-ken,, 471-8571 (JP)
(74) Representative: Winter, Brandl - Partnerschaft mbB

(57) **Abstract**

The present disclosure provides a method for manufacturing an impact energy absorbing component, and an impact energy absorbing component which achieve both high collision performance and excellent EA performance by local heating. A method for manufacturing an impact energy absorbing component is a method for manufacturing an impact energy absorbing component including a member formed by processing a steel plate, in which at least a part of a bent ridgeline generated by the processing is heated at a temperature of 600°C to an AC1 point. An impact energy absorbing component is an impact energy absorbing component including a member formed by processing a steel plate, in which at least a part of a bent ridgeline generated by the processing has a Vickers hardness equal to or lower than a Vickers hardness of each of flat surfaces constituting the impact energy absorbing component.

## Description

### BACKGROUND

The present disclosure relates to a method for manufacturing an impact energy absorbing component and an impact energy absorbing component.

The reduction of a vehicle weight is an important issue for reducing CO2 emissions by extending the range of a Battery Electric Vehicle (BEV) and improving a fuel efficiency of a conventional gasoline-driven vehicle, and integrations of the components and reduction of the thicknesses of the components by using high-strength steel plates have been often studied.

Japanese Unexamined Patent Application Publication No. 2020-200527 discloses a technology for improving collision performance by heating a ridgeline part of a collision member formed by press working at a temperature of 300 to 600°C to remove the work-hardened layer of the ridgeline part.

### SUMMARY

While a high-strength steel plate has high strength, it has low toughness and ductility, and cracks occur before sufficient energy is absorbed at the time of collision. Therefore, high-strength steel plates have not been widely adopted for collision components.

A method for manufacturing an impact energy absorbing component according to an aspect of the present disclosure is a method for manufacturing an impact energy absorbing component including a member formed by processing a steel plate,
in which at least a part of a bent ridgeline generated by the processing is heated at a temperature of 600°C to an AC1 point.

An impact energy absorbing component according to an aspect of the present disclosure is an impact energy absorbing component including a member formed by processing a steel plate,
in which at least a part of a bent ridgeline generated by the processing has a Vickers hardness equal to or lower than a Vickers hardness of each of flat surfaces constituting the impact energy absorbing component.

According to the present disclosure, it is possible to provide a method for manufacturing an impact energy absorbing component, an impact energy absorbing component, and the like which achieve both high collision performance and excellent EA performance by local heating.

The above and other objects, features and advantages of the present disclosure will become more fully understood from the detailed description given hereinbelow and the accompanying drawings.

### BRIEF DESCRIPTION OF DRAWINGS

Fig. 1 is a diagram for explaining a method for manufacturing an impact energy absorbing component according to some embodiments;
Fig. 2 is a diagram for explaining a part to be measured in a Vickers hardness test according to some embodiments;
Fig. 3 is a diagram for explaining a relationship between heating temperature and hardness of a test piece according to some embodiments;
Fig. 4 shows photographs of a test piece when a drop weight test was performed according to some embodiments;
Fig. 5 shows a stroke load (FS) diagram when a drop weight test was performed according to some embodiments;
Fig. 6 is a diagram showing a maximum load and an Energy Absorption (EA) amount of a test piece when a drop weight test was performed according to some embodiments;
Fig. 7 is a diagram for explaining an example of an impact energy absorbing component according to some embodiments;
Fig. 8 is a diagram for explaining an example of an impact energy absorbing component according to some embodiments;
Fig. 9 is a diagram for explaining an example of an impact energy absorbing component according to some embodiments;
Fig. 10 is a diagram for explaining an example of an impact energy absorbing component according to some embodiments; and
Fig. 11 is a diagram for explaining an example of a heating apparatus according to another embodiment.

### DESCRIPTION OF EMBODIMENTS

Many techniques for reducing the thickness by using high-strength steel plates for frame components of vehicles. However, since collision components, most notably crash boxes and FR side members, are required to have high collision performance and excellent energy absorption characteristics at the same time, reduction of the thickness by using high-strength steel plates is not progressing. This is because, while a high-strength steel plate has high strength, it has low toughness and ductility, and thus cracks occur before sufficient energy is absorbed at the time of collision. Therefore, the present disclosure provides a technique for achieving both high collision performance and excellent EA performance by partially heating collision components using high-strength steel plates after press forming.

Specific embodiments to which the present disclosure is applied will be described hereinafter in detail with reference to the drawings. However, the present disclosure is not limited to the following embodiments. Further, for the clarification of the description, the following descriptions and drawings are simplified as appropriate.

The reduction of a vehicle weight is an important issue for reducing CO2 emissions by extending the range of a Battery Electric Vehicle (BEV) and improving a fuel efficiency of a conventional gasoline-driven vehicle. Therefore, integrations of the components and reduction of the thicknesses of the components by using high-strength steel plates have been often studied.

Collision components, most notably crash boxes and FR members, are required to have high collision performance and excellent energy absorption characteristics at the same time. However, while a high-strength steel plate has high strength, it has low toughness and ductility, and thus cracks occur before sufficient energy is absorbed at the time of collision. Therefore, high-strength steel plates have not been widely adopted for collision components. Further, in a BEV, a crash box is required to absorb a large amount of energy in a shorter stroke in order to increase the size of a battery and achieve short overhang. Therefore, means for promoting bellows deformation at the time of collision with a soft material and securing the maximum load by increasing the plate thickness is used.

Since the aforementioned components are generally manufactured by press working, work-hardening occurs due to dislocations occurred during (bending) forming at the time of production. Therefore, after bending forming, a part of the original deformability of a material is used up during component manufacturing, and energy is absorbed by the remaining deformability at the time of collision (of a vehicle). An object of the present disclosure is to bring out the original deformability of a material to the limit by recovering dislocations occurred during press forming caused by local heating.

A collision safety component is manufactured by press working such as bending or drawing using a high-strength steel plate having a tensile strength of 780 MPa or higher. The manufactured collision safety component is heated at a temperature of 600°C to an AC1 point (approximately 730°C, depending on material composition) for one to five seconds at the bent ridgeline in a direction perpendicular to a main collision direction (the vertical direction in the case of a drop weight test). By doing so, the work-hardened layer generated during press working is eliminated, and both high collision performance and energy absorption performance can be achieved.

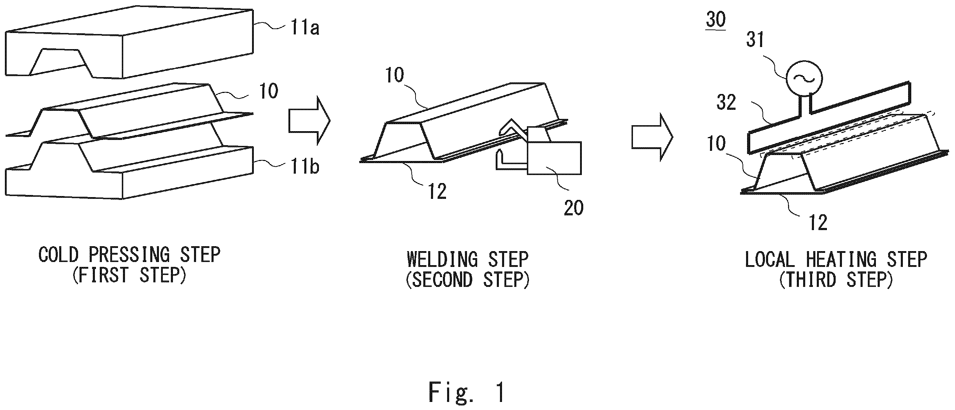

Fig. 1 is a diagram for explaining a method for manufacturing an impact energy absorbing component according to the present disclosure.

In a first step, a workpiece 10 is pressed by upper and lower press dies 11a and 11b. The workpiece 10 may be a structural member for an automobile formed into a product shape by cold press working using a high tensile strength steel sheet having a tensile strength of 780 MPa or higher. The workpiece 10 may be, in particular, an impact energy absorbing member that requires collision absorbing energy.

In a second step, the workpiece 10 is partially welded with another component 12 (a flat plate in Fig. 1) by a spot welding machine 20.

In a third step, at least a part of a bent ridgeline of the workpiece 10 is heated by using a heating apparatus 30. At least a part of the bent ridgeline of the workpiece 10 may be a part (a part on the bent ridgeline) where a cracking starts to occur at the time of collision. The heating is performed at a temperature of 600°C to the AC1 point (approximately 730°C) for one to five seconds. The cooling rate is not limited to a particular rate.

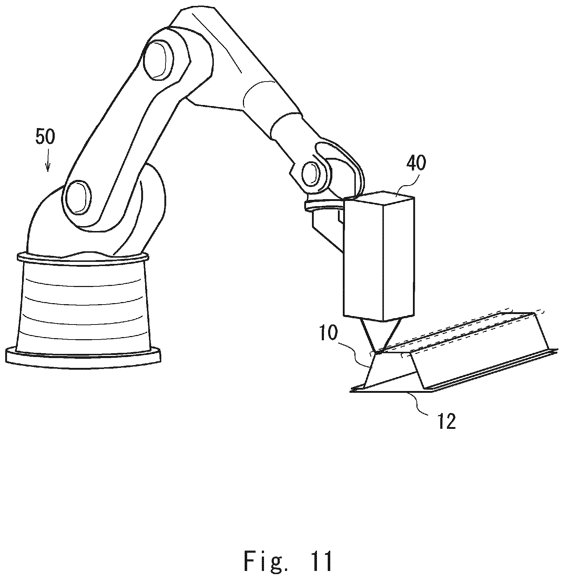

The heating apparatus 30 shown in the third step of Fig. 1 includes a high-frequency oscillator 31 and a heating coil 32 connected to the high-frequency oscillator 31. The heating coil 32 extends along a bent ridgeline of the workpiece 10. The heating coil 32 is disposed closely along a bent ridgeline of the workpiece 10 using a positioning jig. As this heating method, productivity can be improved by combining high-frequency induction heating with a positioning jig or the like. In another embodiment, other heating methods such as those using a laser (see Fig. 11) and a heater may be employed.

Next, a relationship between the heating temperature of the workpiece and the hardness of the workpiece after heating is examined.

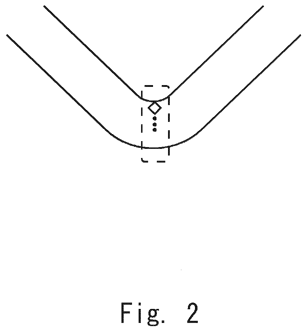

A test piece having a plate thickness of 1.4 mm having a tensile strength of 1180 MPa was bent at an in-plate R of 7 mm. The ridgeline of the bent test piece was subjected to heat treatment at various temperatures from 400°C to 800°C for five seconds. Fig. 2 is a diagram showing the bent ridgeline of the bent test piece viewed from above. As indicated by a broken line in Fig. 2, the hardness of the bending tip was measured by a Vickers hardness test at 7 points (the first point is 0.1 mm, then at intervals of 0.2 mm) in a direction of the plate thickness from the inside of the bending. In the Vickers hardness test, a pyramidal indenter made of diamond was pressed against the test piece, the formed indentation was observed under a microscope, and the length of the diagonal line (the surface area) was measured, to thereby determine the hardness.

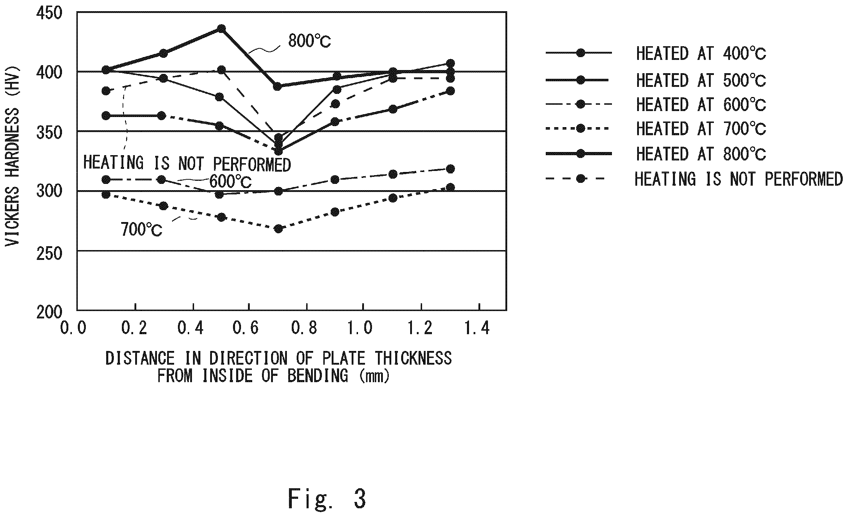

Fig. 3 shows a result of measurement of the Vickers hardness test. In Fig. 3, the horizontal axis indicates the distance (mm) from the inside of the bending in the direction of the plate thickness. The vertical axis indicates the Vickers hardness (HV). As shown in Fig. 3, it can be confirmed that the hardness softens by heating at a temperature of 600 to 700°C, and conversely increases at a temperature of 800°C. It is assumed that this is because martensitic transformation occurred at 800°C as a result of exceeding the transformation point. Therefore, it is considered that a suitable heating temperature that can prevent cracking at the time of collision is a temperature of 600°C to the AC1 point (a temperature at which the transformation starts). Note that, as shown in Fig. 3, the hardness softens around the center (0.7 mm) as a whole. It is considered that this is because compressive stress is applied on the upper side of the part to be measured (Fig. 2) and tensile stress is applied on the lower side thereof, and the compressive stress and the tensile stress are balanced in the vicinity of the center of these sides, and work-hardening hardly affects thereon. In other words, it is considered that the work-hardened layer is formed on the upper side or the lower side of the bent ridgeline, while very few work-hardened layers are formed in the vicinity of the center of these sides.

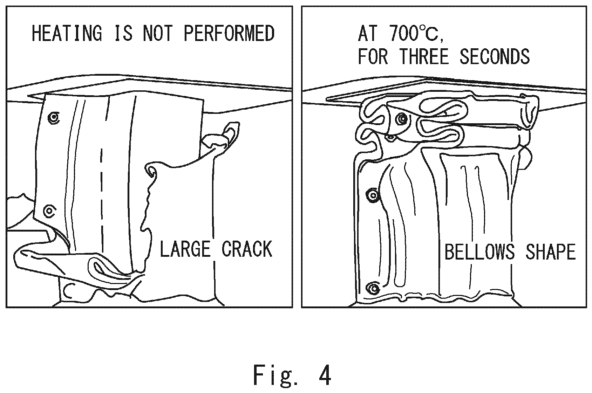

Fig. 4 shows photographs of a test piece when a drop weight test was performed. Four ridgelines of the hat-shaped test piece using a high-strength steel plate having a tensile strength of 1180 MPa were heated at 700°C for three seconds. As shown in the photograph on the left side of Fig. 4, it can be seen that large cracks occurred along the ridgelines of the test piece which is not heated. On the other hand, as shown in the photograph on the right side of Fig. 4, it can be seen that the heated test piece buckled like a bellows without cracking.

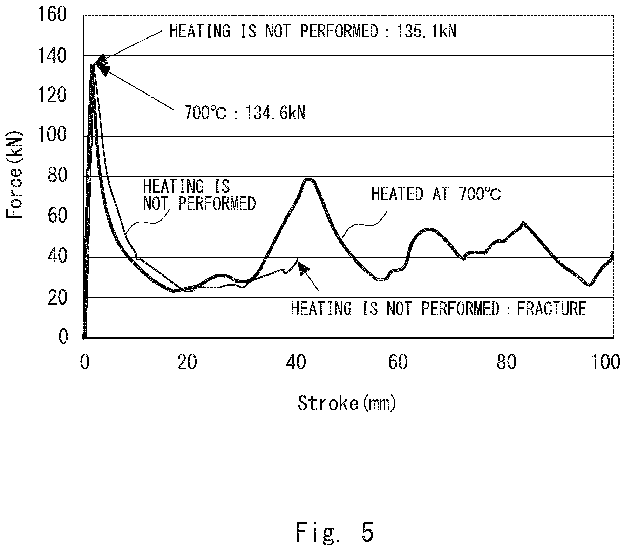

Fig. 5 shows the stroke load (FS) diagram at this time. The horizontal axis shows the stroke (mm), and the vertical axis shows the force (kN).

From the rise after the stroke of 2 mm, it can be confirmed that the maximum loads (135.1 kN and 134.6 kN) are almost unchanged (the difference is less than 1%) between the case in which heating is not performed and the case in which heating is performed (700°C). On the other hand, from the time of the stroke of 40 mm (i.e., after the collapse of 40 mm occurred), the fracture occurred in the case in which heating is not performed, while the fracture did not occur in the case in which heating is performed. It is therefore considered that a difference in the energy absorption has occurred between the case in which heating is not performed and the case in which heating is performed.

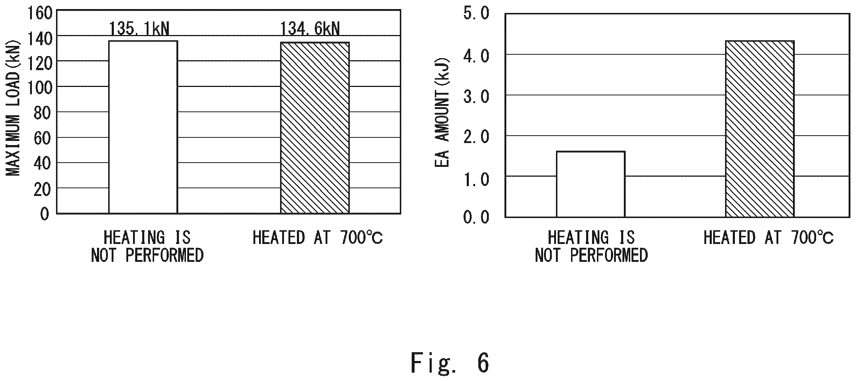

Fig. 6 shows the maximum load and the Energy Absorption (EA) amount of the test piece when the drop weight test was performed. As shown in the left part of Fig. 6, there is no change in the maximum load between the case in which heating is not performed and the case in which heating is performed. That is, by performing heating, the maximum load does not significantly decrease (about less than 1%), and high collision performance can be maintained. On the other hand, as shown in the right part of Fig. 6, an EA amount of about 2.5 times can be obtained by performing heating at 700°C. As described above, it can be confirmed that both high collision performance and excellent EA performance are achieved by the local heating according to this embodiment.

A difference between a maximum load of the impact energy absorbing component and a maximum load of a component which has a shape similar to that of the impact energy absorbing component and for which heating is not performed according to this embodiment may be less than 3%, preferably less than 1%. Further, an Energy Absorption (EA) amount of the impact energy absorbing component is 1.5 times or larger, preferably 2 times or larger, than an EA amount of the component which has a shape similar to that of the impact energy absorbing component and for which heating is not performed.

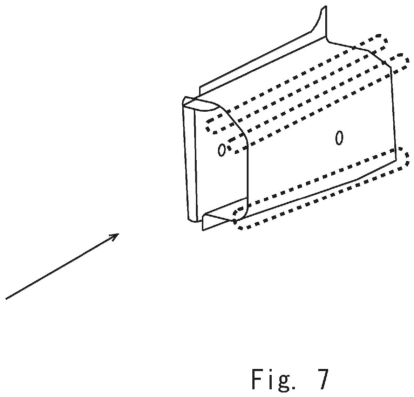

Figs. 7 to 10 show various examples of an impact energy absorbing component according to some embodiments.

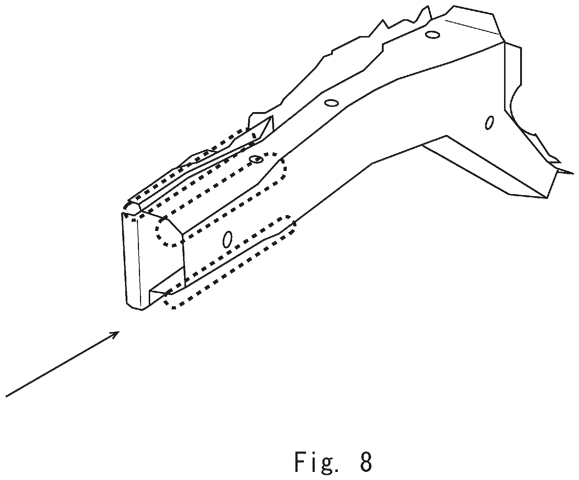

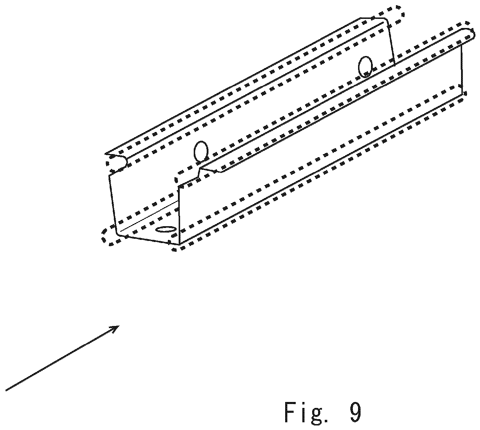

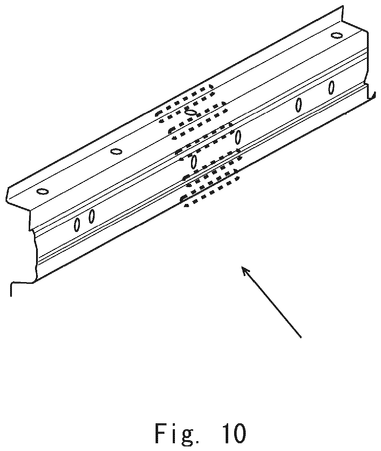

Fig. 7 is a crash box of structural members for an automobile. Fig. 8 is an FR side member of structural members for an automobile. Fig. 9 is an RR floor side member RR of structural members for an automobile. Fig. 10 is a rocker outer of structural members for an automobile. Although these members are typical impact energy absorbing components for an automobile, the present disclosure is not limited thereto.

In each of Figs. 7 to 9, an arrow indicates a general collision direction mainly assumed, specifically a front-rear direction of the vehicle. In Fig. 10, an arrow indicates a general collision direction mainly assumed, which direction is perpendicular to a front-rear direction of the vehicle. Further, an area assumed to be heated is indicated by a broken line. At least a part of a bent ridgeline generated by the processing has a Vickers hardness equal to or lower than a Vickers hardness of each of flat surfaces constituting the impact energy absorbing component. In particular, as shown in Figs. 7 to 9, a plurality of (preferably, all of) bent ridgelines adjacent to each other along a general collision direction are heated substantially uniformly. For example, the heating temperatures are all between 600°C and the AC1 point. Accordingly, a plurality of (preferably, all of) bent ridgelines adjacent to each other along the collision direction have a substantially uniform Vickers hardness. Thus, as shown on the right side of Fig. 4, the impact energy absorbing component is formed so that the planes constituting the impact energy absorbing component are alternately bent outward in a bellows shape when the impact energy absorbing component is compressed and deformed at the time of collision.

In some embodiments, as shown in Figs. 1, 7, and 8, a plurality of bent ridgelines adjacent to each other along a main collision direction are heated (substantially uniformly) after a cross-section of the impact energy absorbing component is processed into a closed cross-section. In some embodiments, a part of the closed cross-section, that is, at least a part of the bent ridgeline, may be heated.

Fig. 10 shows an example of a case in which the bent ridgeline of the rocker outer is at least partially heated. In this example, a mode control design technique is used. Regarding a part of the bent ridgeline to be heated, deformation of a structural member for an automobile at the time of collision can be assumed while taking into account the positions of one or more passengers in the vehicle.

That is, in some embodiments, an impact energy absorbing component may be provided. The impact energy absorbing component is formed so that flat surfaces constituting the impact energy absorbing component are alternately bent outward when the impact energy absorbing component is compressed and deformed along a main collision direction. Further, in the impact energy absorbing component including a member formed by processing a steel plate, at least a part of a bent ridgeline generated by the processing has a Vickers hardness equal to or lower than a Vickers hardness of each of the flat surfaces constituting the impact energy absorbing component. Regarding the bent ridgelines of the impact energy absorbing component, at least a part of each of work-hardened layers of a plurality of ridgeline parts adjacent to each other along a main collision direction (a front-rear direction of the vehicle shown in Figs. 7 to 9, a left-right direction of the vehicle shown in Fig. 10) is removed. The impact energy absorbing component includes a member formed by processing a high-strength steel plate having a tensile strength of 1180 MPa or higher. Regarding the bent ridgelines of the impact energy absorbing component, Vickers hardnesses of a plurality of ridgeline parts adjacent to each other along a main collision direction (a front-rear direction of the vehicle shown in Figs. 7 to 9, a left-right direction of the vehicle shown in Fig. 10) are equal to or lower than Vickers hardnesses of the flat surfaces constituting the impact energy absorbing component, and are substantially uniform. A difference between a maximum load of the impact energy absorbing component and a maximum load of a component which has a shape similar to that of the impact energy absorbing component and for which heating is not performed is less than 1%, and an Energy Absorption (EA) amount of the impact energy absorbing component is 1.5 times or larger than an EA amount of the component which has a shape similar to that of the impact energy absorbing component and for which heating is not performed.

Fig. 11 is a diagram for explaining an example of a heating apparatus according to another embodiment.

It is possible to obtain the same effect as that obtained in the above-described embodiment as well by laser heating. For example, a laser source 40 is attached to the tip of the arm of a six-axis robot 50. As described above, the laser source 40 may be moved in parallel along the bent ridgeline to irradiate the ridgeline with a laser.

Note that the present disclosure is not limited to the above-described embodiments and may be changed as appropriate without departing from the scope and spirit of the present disclosure.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A method for manufacturing an impact energy absorbing component comprising a member formed by processing a steel plate,
wherein at least a part of a bent ridgeline generated by the processing is heated at a temperature of 600°C to an AC1 point.

2. The method according to claim 1, wherein heating is performed for one to five seconds.

3. The method according to claim 1, wherein the at least a part of the bent ridgeline is locally heated by a high frequency induction.

4. The method according to claim 1, wherein the steel plate is a high-strength steel plate having a strength of 1180 MPa or higher.

5. The method according to claim 1, wherein at least a part of each of a plurality of the bent ridgelines adjacent to each other along a main collision direction is heated substantially uniformly after a cross-section of the impact energy absorbing component is processed into a closed cross-section.

6. An impact energy absorbing component comprising a member formed by processing a steel plate,
wherein at least a part of a bent ridgeline generated by the processing has a Vickers hardness equal to or lower than a Vickers hardness of each of flat surfaces constituting the impact energy absorbing component.

7. The impact energy absorbing component according to claim 6, wherein, regarding the bent ridgelines of the impact energy absorbing component, at least a part of each of work-hardened layers of a plurality of ridgeline parts adjacent to each other along a main collision direction is removed.

8. The impact energy absorbing component according to claim 6, wherein the impact energy absorbing component comprises a member formed by processing a high-strength steel plate having a tensile strength of 1180 MPa or higher.

9. The impact energy absorbing component according to claim 6, wherein the impact energy absorbing component is formed so that the flat surfaces constituting the impact energy absorbing component are alternately bent outward when the impact energy absorbing component is compressed and deformed along a main collision direction.

10. The impact energy absorbing component according to claim 6, wherein, regarding the bent ridgelines of the impact energy absorbing component, Vickers hardnesses of a plurality of ridgeline parts adjacent to each other along a main collision direction are equal to or lower than Vickers hardnesses of the flat surfaces constituting the impact energy absorbing component, and are substantially uniform.

11. The impact energy absorbing component according to claim 6, wherein a difference between a maximum load of the impact energy absorbing component and a maximum load of a component which has a shape similar to that of the impact energy absorbing component and for which heating is not performed is less than 1%, and an Energy Absorption (EA) amount of the impact energy absorbing component is 1.5 times or larger than an EA amount of the component which has a shape similar to that of the impact energy absorbing component and for which heating is not performed.
